# EUROPÄISCHE PATENTSCHRIFT

(11) **EP 1 826 122 B1**
(45) Veröffentlichungstag und Bekanntmachung des Hinweises auf die Patenterteilung: **06.10.2010**
(21) Anmeldenummer: 07003524.1
(22) Anmeldetag: 21.02.2007
(51) Int. Cl.: B65D 83/06, B65D 88/28

(54) **Platte für Verteilen von Kugeln**
Plate for Depression for distributing spherical bodies
Plaque pour la distribution de corps sphériques

(30) Priorität: 24.02.2006 EP 06003815
(43) Veröffentlichungstag der Anmeldung: 29.08.2007
(73) Patentinhaber: Roche Diagnostics GmbH, 68305 Mannheim (DE); F.HOFFMANN-LA ROCHE AG, 4070 Basel (CH)
(72) Erfinder: Eberle, Walter, 82347 Bernried (DE); Guenzl, Peter, 82377 Penzberg (DE); Hloch, Peter, 82377 Penzberg (DE); Hundt, Christoph, 81371 Muenchen (DE); Lindner, Thomas, 82398 Polling (DE)

(56) Entgegenhaltungen:
- US-A- 3 545 164
- US-A- 4 627 225
- US-A- 4 834 264
- US-A- 4 960 195
- US-A- 5 329 749

## Beschreibung

### Stand der Technik

Bekannt aus dem Dokument US 4,960,195 sind Vorrichtungen, mittels derer quaderförmige Objekte wie z.B. Mikrochips aus einem Vorrat in einen Schacht eingespeist werden, wobei der Schacht einen rechteckigen oder ovalen Querschnitt hat. US 4,960,195 offenbart eine waagerechte Platte mit gleichgroßen Öffnungen mit rechteckigem oder ovalem Querschnitt, wobei die Platte auf der oberen Seite um jede Öffnung herum eine Vertiefung aufweist. Auf der Ebene der Plattenoberfläche hat der Umfang der Vertiefung eine ovale oder rechteckige Form. Die Wand und der Boden einer ovalen Vertiefung sind gewölbt und der Boden der ovalen Vertiefung verjüngt sich in Richtung der Mitte der Öffnung. Ähnliche Vorrichtungen sind aus JP 36630/1987 bekannt (zitiert nach US 4,960,195). Hier enthält die Platte einen Schacht mit rechteckigem Querschnitt. Auf einer Seite weist die Platte eine Vertiefung mit kreisförmigem Querschnitt auf, die sich konisch zur Mitte des rechteckigen Querschnitts verjüngt.

Die Vorrichtung der US 4,960,195 entspricht dem Oberbegriff des Anspruchs 1.

Die Entnahme von Kugeln aus einem Vorrat, in bestimmter Menge zu einem bestimmten Zeitpunkt sowie die Positionierung der Kugeln zum Zweck der kontrollierten, mechanischen Entnahme ist ein spezielleres technisches Problem, für das im Stand der Technik ebenfalls bereits einige Lösungsansätze beschrieben wurden.

US 3,552,600 beschreibt einen Kugeldispenser, eine Vorrichtung zur kontrollierten Entnahme von Kugeln gleicher Größe aus einem Vorrat. Die darin offenbarte Vorrichtung umfasst einen Vorratsbehälter, einen Schacht mit einer trichterförmigen Zuführung und einer Förderspindel. Letztere enthält eine Auskehlung, mittels derer eine Kugel aus dem Schacht entnommen und ausgeworfen wird, indem die Spindel gedreht wird.

US 4,648,529 beschreibt eine Anordnung mit einem Kugelreservoir, das mit einem kreisrunden Trichter verbunden ist. Das verjüngte Ende des Trichters zeigt nach unten und mündet in einen Kanal, dessen Durchmesser dem Durchmesser der Kugeln im Reservoir entspricht. Der Schwerkraft folgend gelangen die Kugeln, die von gleicher Größe sind, in den Kanal, in dem sie hintereinander angeordnet sind. An seinem Ende wird der Kanal durch eine Schleusenkammer, die jeweils nur eine einzige Kugel aufnehmen kann, unterbrochen. Die Schleusenkammer ist beweglich angeordnet. Durch eine Sprungfeder werden die Öffnungen der Schleusenkammer leicht versetzt, so dass entweder eine Kugel den Kanal aber nicht die Schleusenkammer verlassen kann oder dass eine Kugel die Schleusenkammer aber nicht den Kanal verlassen kann. Durch Drücken gegen die Feder und anschliessendes Entspannen fällt jeweils eine Kugel in die Schleusenkammer und wird anschliessend aus der Vorrichtung entlassen.

DE 198 18 417 C2 offenbart einen Schacht zur Aufnahme von Mikrokörpern, beispielsweise Kugeln, wobei die Höhe des Schachtes die Anzahl der Mikrokörper, die aufgenommen werden können, vorgibt. Das obere Ende des Schachtes ist trichterförmig verbreitert. Die Mikrokörper werden einzeln aus dem Schacht entnommen mittels eines Saugmechanismus'.

US 2002/0040521 A1 beschreibt einen Schablonenrahmen zum Positionieren von Lotkugeln. Der Schablonenrahmen besteht aus einer Platte mit Kammern in Form von Bohrungen, in die jeweils eine einzige Lotkugel hineinpasst. Der Schablonenrahmen wird auf einer Unterlage so aufgelegt, dass die Öffnungen der Bohrungen einerseits der Unterlage zugewandt und andererseits nach oben hin offen sind. Jede Bohrrung wird mit einer Kugel befüllt, damit das Lot anschließend durch Erhitzen mittels eines Lasers an der jeweiligen Position auf der Unterlage fixiert werden kann. US 2002/0179696 A1 beschreibt eine Anordnung zur Positionierung von Lotkugeln, in der eine Kammer einer Schablone aus einem darüber liegenden Kugelvorrat befüllt wird, wobei über der Kammer eine trichterförmige Aussparung angeordnet ist, in der sich die Kugeln aus dem Vorrat sammeln und, zum Zweck des Einfüllens, zu der Kammer geführt werden.

EP 1 033 566 B1 offenbart eine Vorrichtung zum Befüllen einer Vielzahl einzelner Mahlräume mit Kugeln, die als Mahlkörper verwendet werden. Die Vorrichtung umfasst eine Platte mit 96 durchgehenden kreisrunden Öffnungen, die in regelmäßiger Form als 8x12 Gitter angeordnet sind. Der Durchmesser der Öffnungen ist größer als der Durchmesser der Kugeln. An der Platte ist ein Schieber beweglich angeordnet, der im eingeschobenen Zustand den Boden der Öffnungen darstellt, so dass in diesem Zustand Kugeln in die Öffnungen eingelegt werden können. Danach wird die Platte über einen Block mit Mahlräumen, die im gleichen 8x12 Gitter angeordnet sind, gebracht, so dass die Öffnungen der Platte sich fluchtend über den Öffnungen der Mahlräume befinden. Der Schieber wird aus der Platte herausgezogen und die Mahlkörper fallen in die Mahlräume.

Kugeln, beispielsweise zur Verwendung als Mahlkörper, bestehen in vielen Fällen aus Materialien, die keine glatten sondern rauhe Oberflächen haben können. Beispiele hierfür sind Kugeln aus Glas oder keramischen Materialien (z. B. gesinterte Keramiken, Harzporzellan), aus Mineralgesteinen (z. B. Marmor, Achat), Metalle (z. B. Eisen, Wolframcarbid) oder Kunststoffe (z. B. Polyamid, Teflon) sowie zweiphasige Körper (z. B. mit Teflon ummantelte Stahlkugeln).

### Aufgabenstellung und Zusammenfassung der Erfindung

Ausgangspunkt der Erfindung ist ein mit Kugeln befüllter Vorratsbehälter, der in seinem Boden über eine oder mehrere Öffnugen verfügt, wobei der Durchmesser jeder Öffnung groß genug für den Durchtritt einer Kugel ist. Nach Befüllung des Vorrats, insbesondere mit einer mehrschichtigen Kugelpackung, behindern sich die Kugeln beim Austritt durch die Öffnung(en) gegenseitig, so dass nur wenige oder gar keine Kugeln der Schwerkraft folgend den Vorrat verlassen können. Selbst durch Rütteln des Vorratsbehälters wird kein gleichförmiger und vorhersagbarer (Menge pro Zeiteinheit) Austritt von Kugeln durch die Öffnungen erzielt. Aufgabe der vorliegenden Erfindung ist es daher, eine Bodenplatte mit einer oder mehreren Öffnungen so zu modifizieren, dass die Hinderung der Kugeln, den Vorratsbehälter durch die Öffnungen zu verlassen, reduziert wird.

Die Aufgabe wird erfindungsgemäß durch eine Vorrichtung mit den Merkmalen des Anspruchs 1, eine Verwendung gemäß Anspruch 13 sowie eine Methode gemäß Anspruch 17 gelöst. Weitere Merkmale und besondere Ausführungsformen der Erfindung sind Gegenstand der Unteransprüche.

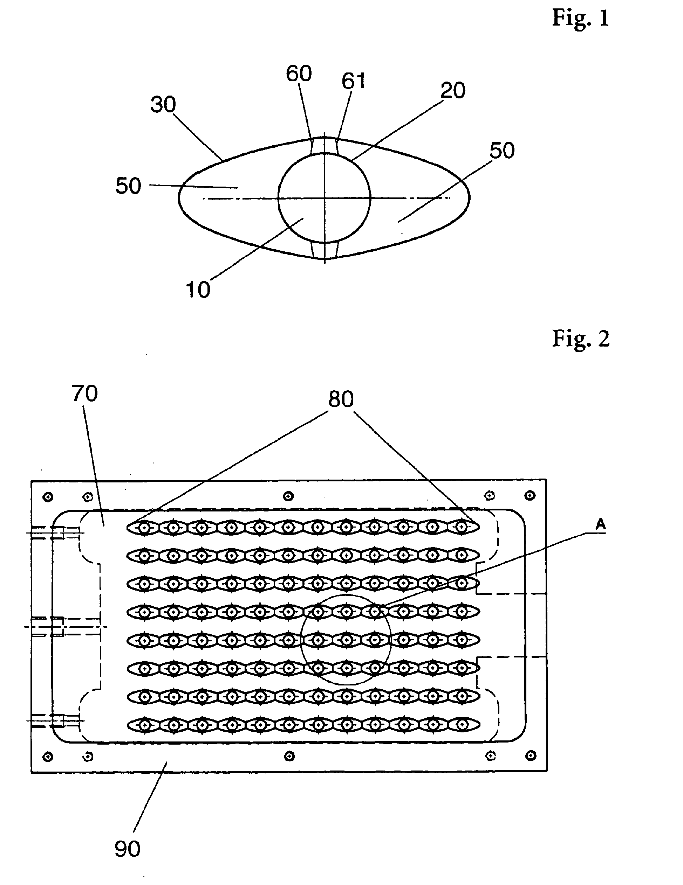

Die Erfinder haben überraschenderweise gefunden, dass eine Vertiefung zur Einspeisung von Kugeln wie in Figur 1 gezeigt zu einem verbesserten Austritt der Kugeln aus dem Vorrat in die Öffnung führt. Ebenso überraschend war, dass die Einspeisung von Kugeln dann besonders gut gelingt, wenn solche Vertiefungen bei mehreren nebeneinander angeordneten Öffnungen miteinander überlappen. Erfindungsgemäß wurde die Aufgabe daher gelöst durch Bereitstellen einer Vorrichtung umfassend eine waagerechte Platte mit zwei oder mehr gleichgroßen und senkrecht von der oberen zur unteren Seite durchlaufenden Öffnungen, wobei die Platte auf der oberen Seite um jede Öffnung herum eine Vertiefung erster Art (Vertiefung zur Einspeisung von Kugeln, im Folgenden durch die Abkürzung V1 bezeichnet) aufweist und die Wand und der Boden der V1 gewölbt sind, dadurch gekennzeichnet, dass die Öffnungen kreisrund sind, bespielsweise in Form von Bohrungen, der Umfang jeder V1 auf der Ebene der Plattenoberfläche eine elliptische, ovale oder spindelförmige Form aufweist, der Boden der V1 entlang der Längsachse zur Mitte der Öffnung hin geneigt ist, der Mittelpunkt jeder Öffnung jeweils auf dem Mittelpunkt der Längsachse und der Querachse des Umfangs der über ihr angeordneten V1 liegt, zwei oder mehr V1 auf einer gemeinsamen Längsachse angeordnet sind, und die Umfänge von zwei oder mehr V1 miteinander überlappen. Eine weitere Ausführungsform der Erfindung ist die Verwendung einer erfindungsgemäßen Vorrichtung zum Verteilen von Kugeln. Eine weitere Ausführungsform der Erfindung ist eine Methode zum Entnehmen einer vorbestimmten Anzahl an Kugeln aus einem Vorrat von im Wesentlichen gleich großen Kugeln, umfassend die Schritte (a) Bereitstellen eines Kugelvorrates in einem Vorratsbehälter mit einer erfindungsgemäßen Vorrichtung als Bodenplatte, wobei der Radius jeder Öffnung dem durchschnittlichen Radius der Kugeln, multipliziert mit einem Faktor zwischen 1,05 und 1,95 entspricht; (b) Bereitstellen eines quaderförmigen Blocks mit einer oder mehreren senkrecht von der oberen zur unteren Seite durchlaufenden Bohrungen mit kreisrundem Querschnitt, wobei Anzahl, Durchmesser und Position der Bohrungen denen der Öffnungen der Bodenplatte in Schritt (a) entsprechen, die Bodenplatte dem Block aufliegt und der Block gegenüber der Bodenplatte verschiebbar ist, so dass in einer ersten Position die Öffnungen der Bodenplatte mit den Bohrungen des Blocks fluchten (Position 1) und in einer zweiten Position Bodenplatte und Block so gegeneinander verschoben sind, dass keine Kugeln durch die Öffnungen der Bodenplatte in die Bohrungen des Blocks gelangen können (Position 2), und die Länge der Bohrungen im Block so gewählt ist, dass in jeder Bohrung eine vorbestimmte Anzahl an Kugeln aufgestapelt werden können und dass die jeweils oberste Kugel auf der Höhe des oberen Randes der jeweiligen Öffnung im Wesentlichen bündig abschliesst, ohne über den Rand hinauszuragen; (c) Bereitstellen einer gegen den Block verschiebbaren Abschlussplatte unterhalb des Blocks, mit einer oder mehreren senkrecht von der oberen zur unteren Seite durchlaufenden Bohrungen, wobei Anzahl, Durchmesser und Position der Bohrungen denen der Öffnungen der Bodenplatte in Schritt (a) entsprechen, und die Abschlussplatte so angeordnet ist, dass sie in einer ersten Position für die Bohrungen des Blocks einen Boden bereitstellt (Position 3) und in einer zweiten Position die Öffnungen der Bodenplatte nach unten freigibt (Position 4); (d) Befüllen der Bohrungen im Block, wobei Bodenplatte und Block in Position 1 und Block und Abschlussplatte in Position 3 angeordnet sind; und (e) Entnahme der Kugeln aus den Bohrungen des Blocks durch Anordnen von Bodenplatte und Block in Position 2 und Block und Abschlussplatte in Position 4, wobei unterhalb der Bohrungen des Blocks ein oder mehrere Auffanggefäße vorgehalten werden.

### Ausführliche Beschreibung der Erfindung

Die folgenden Betrachtungen gelten bevorzugt für "Kugeln von im Wesentlichen gleicher Größe", gleichbedeutend mit "etwa gleichgroße Kugeln". Dies bedeutet, dass der Durchmesser solcher Kugeln im Durchschnitt um bis zu 10% oder weniger variiert. Angegeben als Vielfaches des Kugelradius (r_{K}) variiert der Durchmesser solcher Kugeln bevorzugt um bis zu 2 r_{K}/10 oder weniger. Weiterhin umfasst der Begriff "Kugel" auch im Wesentlichen kugelförmige Körper. Darunter wird verstanden, dass der dem Radius einer idealen Kugel entsprechende Abstand zwischen dem Mittelpunkt und einem beliebigen Punkt der Oberfläche im Durchschnitt um bis zu 10% oder weniger variiert. Bezogen auf den durchschnitlichen Radius entspricht dies 2 r_{K}/10 oder weniger.

Unter einer "Bohrung" wird ein in ein festes Material eingebrachtes zylindrisches Loch verstanden.

Der Begriff "Kugel" bezeichnet einerseits einen kugelförmigen Körper aber im Sinne der Erfindung ebenfalls einen annähernd kugelförmigen Körper, beide jeweils bestehend aus einem festen Material. Die Oberfläche einer Kugel kann glatt oder rau sein. Kugeln im Sinn der Definition sind beispielsweise als Kugeln für Kugellager, Perlen aus Glas oder einem anderen Material einschließlich Naturstoffen (z. B. Perlmutt, Bernstein, Holz), oder als "Mahlkugeln" für Kugelmühlen bekannt. Letztere sind besonders bevorzugt und bestehen bevorzugt aus Stahl oder einem anderen Metall, Achat, Wolframcarbid, Sinterkorund oder Zirkonoxid.

Ausgangspunkt für die Verteilung von Kugeln aus einem Vorrat ist bei der vorliegenden Erfindung ein mit Kugeln gefüllter Behälter. Dieser ist mit einer ebenen und waagerecht ausgerichteten Bodenplatte ausgestattet, wobei in diese Platte zum Zweck des Entlassens von Kugeln eine oder mehrere kreisförmige Öffnungen eingebracht sind, in Form von senkrecht von der oberen zur unteren Seite durchlaufenden Bohrungen. Um jede Öffnung herum weist die Platte auf der oberen, den Kugeln zugewandten Seite eine Vertiefung erster Art auf (V1). Die Wand und der Boden der V1 sind gewölbt und der Umfang der V1 weist auf der Ebene der Plattenoberfläche eine elliptische, ovale oder spindelförmige Form auf.

Erfindungsgemäß besteht eine derartige Platte aus einem festen Material, wobei Polymer-Kunststoff, Holz und Metall bevorzugt sind. Metall ist besonders bevorzugt.

Eine Möglichkeit, eine derartige Vertiefung in der Platte herzustellen, besteht in der Verwendung einer Fräse mit einem kugelförmigen Fräskopf. Der Begriff "Umfang" bezeichnet die Kontur, die durch das Einfräsen oder eine andere Weise der Bearbeitung in der Oberfläche der Platte hinterlassen wird. Der Umfang bildet die Grenzlinie, die die plane Oberfläche der Platte vom Lumen der Vertiefung trennt.

Erfindungsgemäße Vertiefungen mit einem elliptischen, ovalen oder spindelförmigen Umfang können durch ihre Ausdehnung entlang einer Längsachse und einer Querachse beschrieben werden. Generell bezieht sich die Erfindung auf achsensymmetrische Formen mit einem Umfang, dessen Ausdehnung entlang der Längsachse größer ist als die Ausdehnung entlang der Querachse. Diese Achsen helfen auch, die Position der Bohrungsöffnung in einer solchen Vertiefung zu definieren. Erfindungsgemäß liegt der Mittelpunkt der Öffnung (Bohrung) jeweils auf dem Mittelpunkt der Längsachse und der Querachse des Umfangs der V1. Bevorzugt fallen der Mittelpunkt der Öffnung und der Schnittpunkt von Längs- und Querachse des Umfangs der Vertiefung zusammen.

Darüber hinaus ist der Boden der V1 entlang der Längsachse zum Mittelpunkt der Öffnung hin geneigt. Das heißt, dass von den voneinander entferntesten Rändern einer Vertiefung entlang der Längsachse bevorzugt eine schiefe Ebene zur Bohrungsöffnung hinführt. In einer bevorzugten Ausführungsform weist die Neigung des Bodens auf jeder der beiden Hälften der Längsachse der V1 einen Neigungswinkel zwischen 5° und 15° auf. Sehr bevorzugt ist ein Neigungswinkel zwischen 11° und 12° und ganz besonders bevorzugt ein Neigungswinkel von 11,31° (1° entsprechend 1/360 eines Vollkreises).

Die Längsausstreckung einer einzelnen, nicht mit einer anderen überlappenden oder verbundenen V1 bemisst sich aus dem Abstand der Schnittpunkte von Umfang und Längsachse (siehe Figur 1). In einer bevorzugten Ausführungsform beträgt auf dem Umfang der V1 die Distanz der auf der Längsachse liegenden Punkte mit dem größten Abstand, angegeben als Vielfaches des Radius (r_{B}) der Bohrung, zwischen 3 r_{B} und 8 r_{B}. Sehr bevorzugt beträgt die Distanz zwischen 5 r_{B} und 7 r_{B}, besonders bevorzugt zwischen 6 r_{B} und 6,5 r_{B}, und ganz besonders bevorzugt etwa 6,4 r_{B}. Die Querausstreckung einer einzelnen, nicht mit einer anderen überlappenden oder verbundenen V1 bemisst sich aus dem Abstand der Schnittpunkte von Umfang und Querachse (siehe Figur 1). In einer bevorzugten Ausführungsform beträgt auf dem Umfang der V1 die Distanz der auf der Querachse liegenden Punkte mit dem größten Abstand, angegeben als Vielfaches des Radius (r) der Bohrung, zwischen 2,5 r_{B} und 5 r_{B}. Sehr bevorzugt beträgt die Distanz zwischen 2,2 r_{B} und 3,5 r_{B}, besonders bevorzugt zwischen 2,5 r_{B} und 3 r_{B}, und ganz besonders bevorzugt etwa 2,8 r_{B}. Die Schwankungsbreiten der angegebenen Werte ergeben sich aus den am Anmeldetag mit vertretbarem Aufwand (mit handelsüblichen Werkzeugmaschinen) technisch realisierbaren Genauigkeiten.

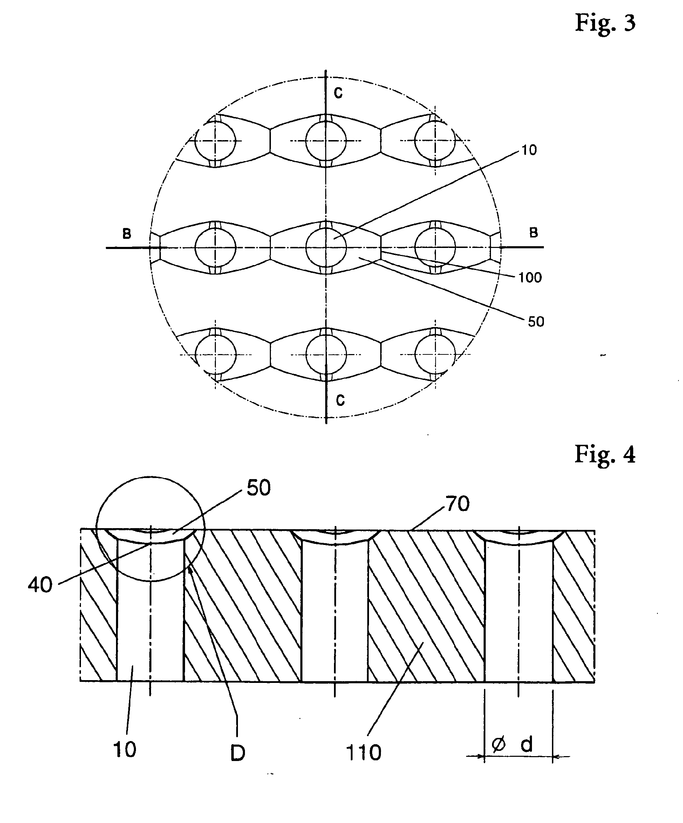

In einer besonders bevorzugten Ausführungsform der Erfindung weist die Platte zwei oder mehr Öffnungen auf und zwei oder mehr V1 sind auf einer gemeinsamen Längsachse angeordnet, wobei zwei oder mehr Umfänge einer Mehrzahl von V1 miteinander überlappen. Eine entsprechende Anordnung wird beispielsweise in den Figuren 2 und 3 gezeigt.

Durch die Überlappungen der zwei oder mehr V1 an den längsseitigen Enden entstehen in der Kontur gerade Grenzlinien. Dies kann bedingt sein durch die Führung des Fräskopfes bei der Herstellung der Vertiefungen in dieser Art von Anordnung. Sehr bevorzugt ist eine Anordnung von mehreren Öffnungen mit mehreren V1, wobei die Platte vier oder mehr Öffnungen umfasst und die V1 so angeordnet sind, dass zwei oder mehr Längsachsen und zwei oder mehr Querachsen dieser V1 sich rechtwinklig kreuzen.

Während die Öffnungen bislang lediglich mit einer Vertiefung erster Art versehen wurden, haben die Erfinder gefunden, dass eine Vertiefung zweiter Art (in Form einer Rille, die Vertiefungen erster Art verbindet; im Folgenden mit V2 bezeichnet), das Einspeisen der Kugeln in die Öffnungen günstig beeinflusst. In einer weiteren besonders bevorzugten Ausführungsform ist eine erste Öffnung mit entweder einer oder mehreren weiteren Öffnungen durch eine oder mehrere gerade, waagerecht verlaufende gewölbte V2 verbunden, wobei die Breite einer V2, angegeben als Vielfaches des Radius (r_{B}) der Bohrung, zwischen 1 r_{B} und 2 r_{B} beträgt und die Tiefe einer V2 zwischen 0,01 r_{B} und 0,1 r_{B} beträgt.

Während mit Hilfe der erfindungsgemäßen Platte Kugeln aus einem Vorrat auf verschiedene Gefäße verteilt werden können, sind Gefäße im "Multiwell" Format ganz besonders bevorzugt. Beispielsweise sind über die Firma Integra Biosciences unter dem Handelsnamen Traxis^{®} Gefäßhalter und Kleingefäße im 8x12 Format mit 96 regelmäßig angeordneten Gefäßen erhältlich. Derartige Gefäße warden von Micronic BV (Lelystad, NL) hergestellt und finden in der Biologie, Biochemie oder Diagnostik eine breite Anwendung. Für die Befüllung solcher Gefäße bzw. zu Gruppen zusammen gestellter Gefäße mit Kugeln ist es sinnvoll, die Öffnungen in der Platte so anzuordnen, dass jedem Gefäß genau eine Öffnung zugeordnet ist und Kugeln aus einer Öffnung direkt in das jeweilige Gefäß gelangen können. In einer besonders bevorzugten Ausführungsform der Erfindung sind in der Platte 96 Öffnungen als 8x12 Gitter angeordnet. Ein weiteres "Multiwell" Format umfasst 384 regelmäßig angeordnete Gefäße. In einer weiteren besonders bevorzugten Ausführungsform der Erfindung sind in der Platte 384 Öffnungen als 16x24 Gitter angeordnet.

Eine weitere besonders bevorzugte Ausführungsform der Erfindung ist eine Vorrichtung zum Befüllen von Gefäßen mit im Wesentlichen gleich großen Kugeln (Kugeldispenser), umfassend (a) einen Vorratsbehälter mit im wesentlichen gleich großen Kugeln, dessen Bodenplatte eine erfindungsgemäße Vorrichtung ist; (b) einen quaderförmigen Block mit einer oder mehreren senkrecht von der oberen zur unteren Seite durchlaufenden Bohrungen, wobei Anzahl, Durchmesser und Position der Bohrungen denen der Öffnungen der Bodenplatte in Schritt (a) entsprechen, die Bodenplatte dem Block aufliegt und der Block gegenüber der Bodenplatte verschiebbar ist, so dass in einer ersten Position die Öffnungen der Bodenplatte mit den Bohrungen des Blocks fluchten und in einer zweiten Position Bodenplatte und Block so gegeneinander verschoben sind, dass keine Kugeln durch die Öffnungen der Bodenplatte in die Bohrungen des Blocks gelangen können, und die Dicke des Blocks so gewählt ist, dass in jeder Bohrung eine vorbestimmte Anzahl an Kugeln aufgestapelt werden können und dass die jeweils oberste Kugel auf der Höhe des oberen Randes der jeweiligen Öffnung im Wesentlichen bündig abschliesst, ohne über den Rand hinauszuragen; (c) eine gegen den Block verschiebbare Abschlussplatte unterhalb des Blocks mit einer oder mehreren senkrecht von der oberen zur unteren Seite durchlaufenden Bohrungen, wobei Anzahl, Durchmesser und Position der Bohrungen denen der Öffnungen der Bodenplatte in Schritt (a) entsprechen, und die Abschlussplatte so angeordnet ist, dass sie in einer ersten Position für die Bohrungen des Blocks einen Boden bereitstellt und in einer zweiten Position die Öffnungen der Bodenplatte nach unten freigibt; (d) ein oder mehrere Auffanggefäße unterhalb der Abschlussplatte, wobei die Anzahl der Auffanggefäße der Anzahl der Bohrungen entspricht und jedes Auffanggefäß so angeordnet ist, dass durch die entsprechende Öffnung der Abschlussplatte fallende Kugeln aufgefangen werden können. In einer ganz besonders bevorzugten Ausführungsform umfasst der Kugeldispenser weiterhin einen Rüttelmechanismus.

Wie bereits oben ausgeführt, kann die erfindungsgemäße Platte enthaltend eine oder mehrere Öffnungen mit V1 und gegebenenfalls mehreren V2 als Vorrichtung zum Verteilen von Kugeln verwendet werden. Besonders bevorzugt ist die Verwendung zum Verteilen von Kugeln, die im Wesentlichen gleich groß sind. In diesem Fall stehen der Radius jeder Öffnung in der Platte und Kugelradius bevorzugt in Beziehung zueinander. In jedem Fall ist der Durchmesser jeder Öffnung etwas größer als der durchschnittliche Kugeldurchmesser, so dass Kugeln den Vorrat durch die Öffnung(en) verlassen können. Erfindungsgemäß und besonders bevorzugt beträgt der Radius jeder Öffnung, angegeben als Vielfaches des durchschnittlichen Radius (r_{K}) einer Kugel, zwischen 1,05 r_{K} und 1,3 r_{K}. Ebenfalls bevorzugt beträgt auf dem Umfang jeder V1 die Distanz der auf der Querachse liegenden Punkte mit dem größten Abstand, angegeben als Vielfaches des durchschnittlichen Radius (r_{K}) einer Kugel, zwischen 3,5 r_{K} und 4 r_{K}. Weiterhin bevorzugt weist die Neigung des Bodens auf jeder der beiden Hälften der Längsachse der V1 einen Neigungswinkel zwischen 11° und 12° auf.

Ganzbesonders bevorzugt ist die Verwendung einer erfindungsgemäßen Vorrichtung zur Verteilung von Kugeln aus einem Material mit einer Dichte zwischen 5 g/cm³ und 8 g/cm³.

Ein weiterer Aspekt der Erfindung ist eine Methode zum Entnehmen einer vorbestimmten Anzahl an Kugeln aus einem Vorrat von im Wesentlichen gleich großen Kugeln, umfassend die Schritte (a) Bereitstellen eines Kugelvorrates in einem Vorratsbehälter mit einer erfindungsgemäßen Vorrichtung als Bodenplatte, wobei der Radius jeder Öffnung dem durchschnittlichen Radius der Kugeln, multipliziert mit einem Faktor zwischen 1,05 und 1,95 entspricht; (b) Bereitstellen eines quaderförmigen Blocks mit einer oder mehreren senkrecht von der oberen zur unteren Seite durchlaufenden Bohrungen mit kreisrundem Querschnitt, wobei Anzahl, Durchmesser und Position der Bohrungen denen der Öffnungen der Bodenplatte in Schritt (a) entsprechen, die Bodenplatte dem Block aufliegt und der Block gegenüber der Bodenplatte verschiebbar ist, so dass in einer ersten Position die Öffnungen der Bodenplatte mit den Bohrungen des Blocks fluchten (Position 1) und in einer zweiten Position Bodenplatte und Block so gegeneinander verschoben sind, dass keine Kugeln durch die Öffnungen der Bodenplatte in die Bohrungen des Blocks gelangen können (Position 2), und die Länge der Bohrungen im Block so gewählt ist, dass in jeder Bohrung eine vorbestimmte Anzahl an Kugeln aufgestapelt werden können und dass die jeweils oberste Kugel auf der Höhe des oberen Randes der jeweiligen Öffnung im Wesentlichen bündig abschliesst, ohne über den Rand hinauszuragen; (c) Bereitstellen einer gegen den Block verschiebbaren Abschlussplatte unterhalb des Blocks mit einer oder mehreren senkrecht von der oberen zur unteren Seite durchlaufenden Bohrungen, wobei Anzahl, Durchmesser und Position der Bohrungen denen der Öffnungen der Bodenplatte in Schritt (a) entsprechen, und die Abschlussplatte so angeordnet ist, dass sie in einer ersten Position für die Bohrungen des Blocks einen Boden bereitstellt (Position 3) und in einer zweiten Position die Öffnungen der Bodenplatte nach unten freigibt (Position 4); (d) Befüllen der Bohrungen im Block, wobei Bodenplatte und Block in Position 1 und Block und Abschlussplatte in Position 3 angeordnet sind; und (e) Entnahme der Kugeln aus den Bohrungen des Blocks durch Anordnen von Bodenplatte und Block in Position 2 und Block und Abschlussplatte in Position 4, wobei unterhalb der Bohrungen des Blocks ein oder mehrere Auffanggefäße vorgehalten werden. In einer besonders bevorzugten Ausführungsform der Erfindung wird in Schritt (d) der Kugelvorrat gerüttelt. Eine ganz besonders bevorzugten Ausführungsform der Erfindung ist dadurch gekennzeichnet, dass die Zustandsänderung von Position 1 und Position 3 zu Position 2 und Position 4 gleichzeitig erfolgt. Hierdurch ist eine besonders effizientze Handhabung der erfindungsgemäßen Methode gewährleistet.

Die folgenden Figuren und Literaturzitate wurden angefügt zum allgemeinen Verständnis der Erfindung, deren Umfang aus den angefügten Ansprüchen hervorgeht.

Die folgenden Publikationen und die Abbildungen erläutern die Erfindung, deren Schutzumfang sich aus den Patentansprüchen ergibt, weiter. Die beschriebenen Verfahren sind als Beispiele zu verstehen, die auch noch nach Modifikationen den Gegenstand der Erfindung beschreiben.

### Beschreibung der Figuren

Die Bezeichnung bestimmter Merkmale durch Nummern wird in allen Figuren einheitlich verwendet, falls nicht anders angegeben. In den Figuren wird kein einheitlicher Maßstab verwendet. Jedoch werden in den einzelnen Figuren die Proportionen der einzelnen Form-beschreibenden Elemente (Strecken, Winkel, Radien, Konturverläufe) jeweils zueinander getreu wiedergegeben und entsprechen einer besonders bevorzugten Ausführungsform.
- **Figur 1**: Einzelne Vertiefung zur Einspeisung von Kugeln (V1, Vertiefung erster Art) (50). Schematische Aufsicht auf eine Bohrung (10) mit einem kreisförmigen Umfang (20), sowie dem Umfang der V1 (30). Weiterhin sind Längs- und Querachse der V1 eingezeichnet. Deren Schnittpunkt und der Mittelpunkt des Bohrungsumfangs fallen auf einen Punkt. Die Figur zeigt eine V1, die mittels einer Fräseinrichtug unter Verwendung eines kugelförmigen Fräskopfes erstellt wurde. Die Konturen (60) und (61) entstehen unter der Voraussetzung, dass der Fräskopf von rechts und von links her kommend in Richtung des Mittelpunkts der Öffnung (10) hin bewegt wird, und der Fräskopf dabei eine Vertiefung mit einer zum Mittelpunkt laufenden Neigung erzeugt.
- **Figur 2**: Gefäßboden (Oberfläche) eines Kugelvorrats mit waagerechter Bodenplatte (70) mit 96 Öffnungen im 8x12 Format, wobei jede einzelne Öffnung mit einer erfindungsgemäßen V1 (Vertiefung erster Art) versehen ist. Die Vertiefungen der V1 sind so eingebracht, dass sie sich an den Enden entlang der Längsachsen überlappen. Die Randständigen V1 überlappen nur auf einer Seite. (80) bezeichnet eine Reihe von 12 Öffnungen mit überlappenden V1. Der mit "A" bezeichnete Ausschnitt ist in Figur 3 vergrößert dargestellt. Die Zeichnung zeigt weiterhin einen Gefäßrand (90), der auf den Gefäßboden aufgesetzt und befestigt ist.
- **Figur 3**: Ausschnitt "A", entsprechend der Übersicht aus Figur 2, aus einer Anordnung mit mehreren, sich überlappenden V1. Der Schnitt "B-B" ist in Figur 4 dargestellt, der Schnitt "C-C" in Figur 6. (10) Bohrung, (50) V1, Vertiefung erster Art. (100) bezeichnet die Kontur, die beim Ausfräsen überlappender Vertiefungen in die Bodenplatte (110) entsteht.
- **Figur 4**: Schnitt "B-B", entsprechend der Übersicht aus Figur 3. Ausschnitt "D" wird in Figur 5 vergrößert gezeigt. "d" bezeichnet den Durchmesser der Bohrung. (110) bezeichnet die Bodenplatte, (70) deren Oberfläche. (40) bezeichnet den Boden der V1 (50).
- **Figur 5**: Ausschnitt "D", entsprechend der Übersicht aus Figur 4. "R" bezeichnet (Pfeil) den Radius des kugelförmigen Fräskopfes, mit dem die Vertiefung der V1 in bevorzugter Weise in das Material der Platte gefräst wird. ① bezeichnet die virtuelle Geometrieverlängerung der durch den Fräskopf mit Radius "R" erzeugten Wölbung. ② bezeichnet die Geometrieverschneidung an der Bohrung. An dieser Kante mündet der Boden (40) der V1 (50).
- **Figur 6**: Schnitt "C-C", entsprechend der Übersicht aus Figur 3.
Ausschnitt "E" wird in Figur 7 vergrößert gezeigt.

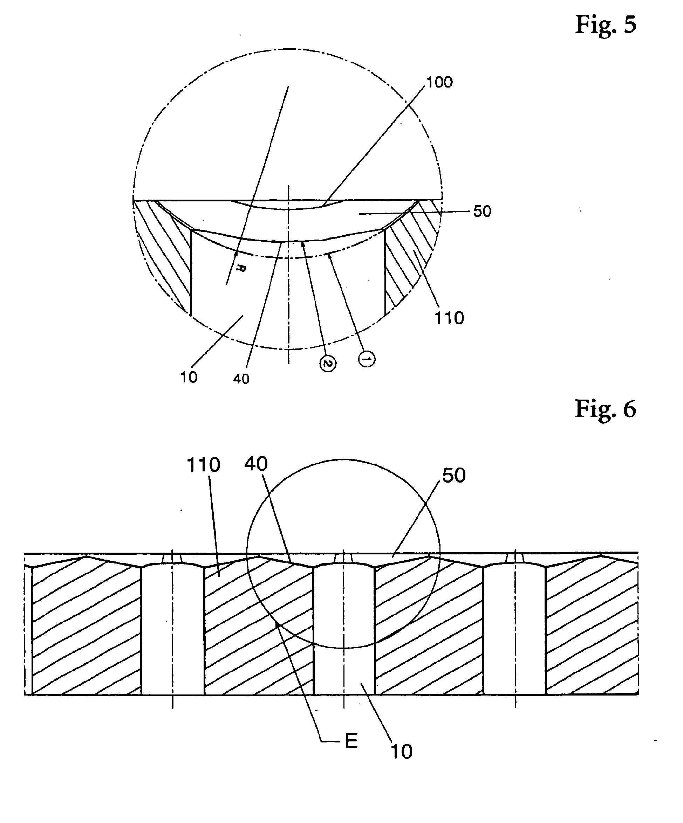

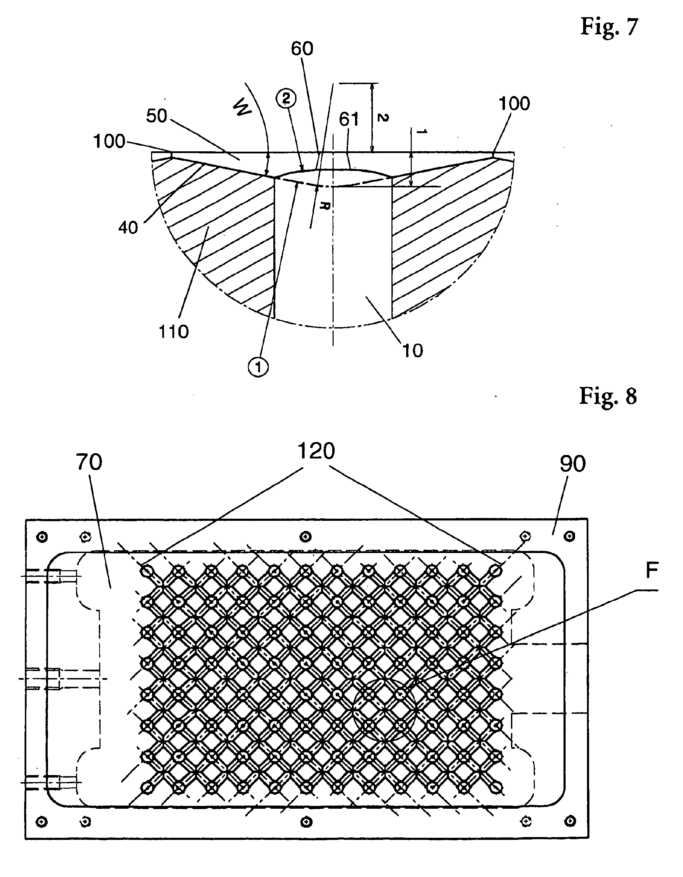

- **Figur 7**: sschnitt "E", entsprechend der Übersicht aus Figur 6. "R" bezeichnet (Pfeil) den Radius des kugelförmigen Fräskopfes, mit dem die Vertiefung der V1 in bevorzugter Weise in das Material der Platte gefräst wird. "W" bezeichnet den Neigungswinkel. ① bezeichnet die virtuelle Geometrieverlängerung der durch den Fräskopf mit Radius "R" erzeugten Wölbung. ② bezeichnet die Geometrieverschneidung an der Bohrung. Die mit "1" bezeichnete Strecke gibt die Frästiefe, bezogen auf die Oberfläche der Platte, wieder. Die Strecken "1" und "2" addieren sich zum Radius des kugelförmigen Fräskopfes.

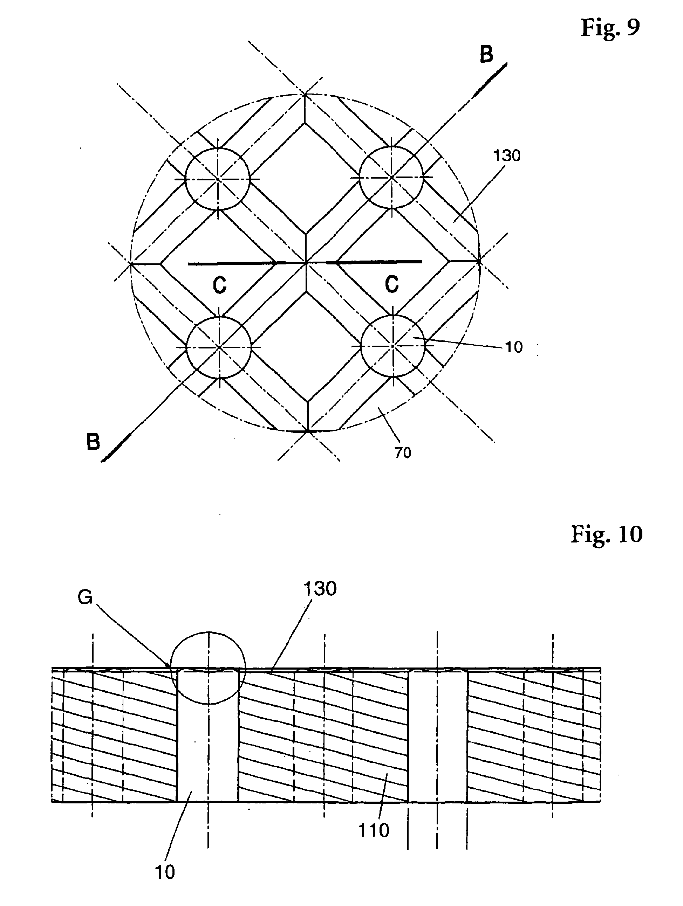

- **Figur 8**: Gefäßboden (70) eines Kugelvorrats mit Bodenplatte mit 96 Öffnungen im 8x12 Format, wobei die Öffnungen diagonal durch mehrere V2 (Vertiefungen zweiter Art) verbunden sind. (120) bezeichnet eine Reihe von 12 Öffnungen. Der mit "F" bezeichnete Ausschnitt ist in Figur 9 vergrößert dargestellt. Die Zeichnung zeigt weiterhin einen Gefäßrand (90), der auf den Gefäßboden aufgesetzt und befestigt ist.

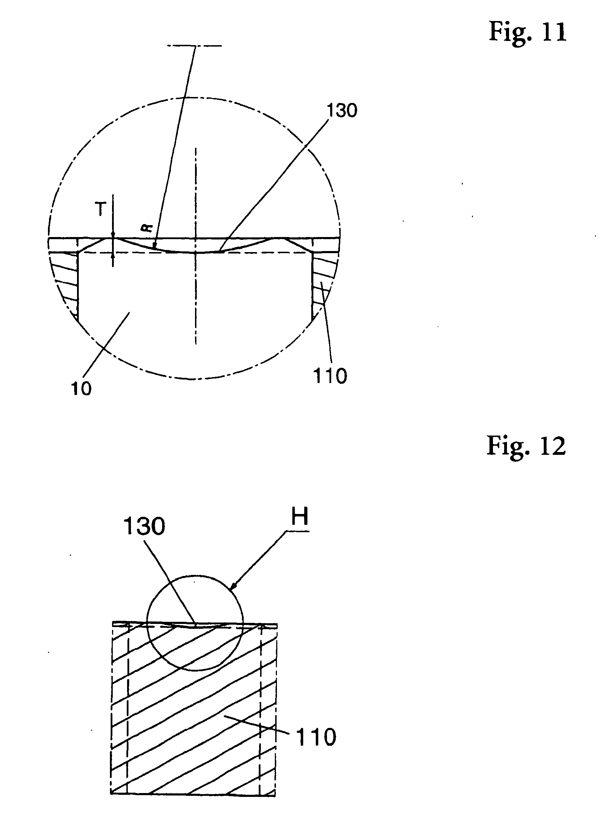

- **Figur 9**: Ausschnitt "F", entsprechend der Übersicht aus Figur 8, aus einer Anordnung mit mehreren Öffnungen, die durch mehrere V2 (Vertiefungen zweiter Art) verbunden sind. Der Schnitt "B-B" ist in Figur 10 dargestellt, der Schnitt "C-C" in Figur 12. (130) bezeichnet eine V2.
- **Figur 10**: Schnitt "B-B", entsprechend der Übersicht aus Figur 9. Ausschnitt "G" wird in Figur 5 vergrößert gezeigt.
- **Figur 11**: Ausschnitt "G", entsprechend der Übersicht aus Figur 10. "R" bezeichnet (Pfeil) den Radius des kugelförmigen Fräskopfes, mit dem die Vertiefung einer V2 (130) in bevorzugter Weise in das Material der Platte gefräst wird. "T" bezeichnet die Strecke, die die Frästiefe für eine V2 angibt.

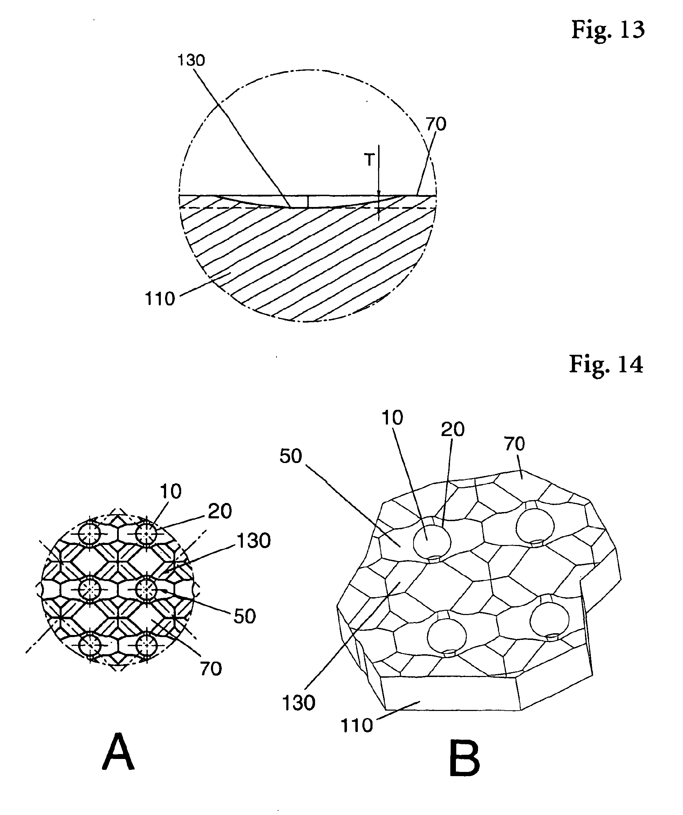

- **Figur 12**: Schnitt "C-C", entsprechend der Übersicht aus Figur 9. Ausschnitt "H" wird in Figur 13 vergrößert gezeigt.
- **Figur 13**: Ausschnitt "H", entsprechend der Übersicht aus Figur 12. "T" bezeichnet die Strecke, die die Frästiefe für eine V2 angibt.
- **Figur 14**: A : Aufsicht auf einen Ausschnitt der einer Plattenoberseite, auf der die in den Figuren 1-7 und die in den Figuren 8-13 dargestellten Strukturen eingefräst wurden. B: Reliefartige Darstellung der überlagerten Strukturen in Schrägansicht.

**Liste zitierter Publikationen**
DE 198 18 417 C2
EP 1 033 566 B1
JP36630/1987
US 2002/0040521 A1
US 2002/0179696 A1
US 3,552,600
US 4,648,529
US 4,960,195

## Patentansprüche

1. Vorrichtung umfassend eine als Bodenplatte eines Vorratsbehälters verwendbare waagerechte Platte (110) mit zwei oder mehr gleichgroßen und senkrecht von der oberen zur unteren Seite durchlaufenden Öffnungen (10), wobei die Platte auf der oberen Seite (70) um jede Öffnung (10) herum eine Vertiefung (50) erster Art aufweist und die Wand und der Boden der Vertiefung erster Art gewölbt sind,
**dadurch gekennzeichnet, dass**
- die Öffnungen (10) kreisrund (20) sind, bespielsweise in Form von Bohrungen,
- der Umfang jeder Vertiefung erster Art (30) auf der Ebene der Plattenoberfläche (70) eine elliptische, ovale oder spindelförmige Form aufweist,
- der Boden der Vertiefung erster Art entlang der Längsachse zur Mitte der Öffnung hin geneigt ist,
- der Mittelpunkt jeder Öffnung jeweils auf dem Mittelpunkt der Längsachse und der Querachse des Umfangs der über ihr angeordneten Vertiefung erster Art liegt,
- zwei oder mehr Vertiefungen erster Art auf einer gemeinsamen Längsachse angeordnet sind, und
- die Umfänge von zwei oder mehr Vertiefungen erster Art miteinander überlappen.

2. Vorrichtung gemäß Anspruch 1, **dadurch gekennzeichnet, dass** auf dem Umfang der Vertiefung erster Art (30) die Distanz der auf der Längsachse liegenden Punkte mit dem größten Abstand zwischen dem 3- und 8-fachen des Radius der Bohrung beträgt.

3. Vorrichtung gemäß einem der Ansprüche 1 oder 2, **dadurch gekennzeichnet, dass** auf dem Umfang der Vertiefung erster Art (30) die Distanz der auf der Querachse liegenden Punkte mit dem größten Abstand zwischen dem 2,5- und 5-fachen des Radius der Bohrung beträgt.

4. Vorrichtung gemäß einem der Ansprüche 1 bis 3, **dadurch gekennzeichnet, dass** die Neigung des Bodens (40) auf jeder der beiden Hälften der Längsachse der Vertiefung erster Art einen Neigungswinkel zwischen 5° und 15° aufweist.

5. Vorrichtung gemäß Anspruch 4, **dadurch gekennzeichnet, dass** die Neigung des Bodens (40) auf jeder der beiden Hälften der Längsachse der Vertiefung erster Art einen Neigungswinkel zwischen 11° und 12° aufweist.

6. Vorrichtung gemäß Anspruch 5, **dadurch gekennzeichnet, dass** der Neigungswinkel 11,31° ist.

7. Vorrichtung gemäß einem der Ansprüche 1 bis 6, **dadurch gekennzeichnet, dass** die Platte (110) vier oder mehr Öffnungen (10) umfasst, wobei eine Mehrzahl von Vertiefungen erster Art (50) so angeordnet sind, dass zwei oder mehr Längsachsen und zwei oder mehr Querachsen dieser Vertiefungen erster Art sich rechtwinklig kreuzen.

8. Vorrichtung gemäß Anspruch 7, **dadurch gekennzeichnet, dass** eine erste Öffnung (10) mit entweder einer oder mehreren weiteren Öffnungen (10) durch eine oder mehrere gerade, waagerecht verlaufende gewölbte Vertiefung zweiter Art (130) verbunden ist, wobei die Breite einer Vertiefung zweiter Art zwischen dem 1- und 2- fachen des Radius der Bohrung beträgt und die Tiefe einer Vertiefung zweiter Art zwischen dem 0,01- und 0,1-fachen des Radius der Bohrung beträgt.

9. Vorrichtung gemäß einem der Ansprüche 7 oder 8, **dadurch gekennzeichnet, dass** in der Platte 96 Öffnungen als 8x12 Gitter angeordnet sind.

10. Vorrichtung gemäß einem der Ansprüche 7 oder 8, **dadurch gekennzeichnet, dass** in der Platte 384 Öffnungen als 16x24 Gitter angeordnet sind.

11. Vorrichtung gemäß einem der Ansprüche 1 bis 10, ferner umfassend
(a) einen Vorratsbehälter mit im wesentlichen gleich großen Kugeln, dessen Bodenplatte die Vorrichtung gemäß einem der Ansprüche 1 bis 10 ist;
(b) einen quaderförmigen Block mit einer oder mehreren senkrecht von der oberen zur unteren Seite durchlaufenden Bohrungen, wobei
- Anzahl, Durchmesser und Position der Bohrungen denen der Öffnungen der Bodenplatte in Schritt (a) entsprechen,
- die Bodenplatte (110) Block aufliegt und der Block gegenüber der Bodenplatte verschiebbar ist, so dass in einer ersten Position die Öffnungen der Bodenplatte mit den Bohrungen des Blocks fluchten und in einer zweiten Position Bodenplatte und Block so gegeneinander verschoben sind, dass keine Kugeln durch die Öffnungen der Bodenplatte in die Bohrungen des Blocks gelangen können, und
- die Dicke des Blocks so gewählt ist, dass in jeder Bohrung eine vorbestimmte Anzahl an Kugeln aufgestapelt werden können und dass die jeweils oberste Kugel auf der Höhe des oberen Randes der jeweiligen Öffnung im Wesentlichen bündig abschliesst, ohne über den Rand hinauszuragen;
(c) eine gegen den Block verschiebbare Abschlussplatte unterhalb des Blocks mit einer oder mehreren senkrecht von der oberen zur unteren Seite durchlaufenden Bohrungen, wobei
- Anzahl, Durchmesser und Position der Bohrungen denen der Öffnungen der Bodenplatte in Schritt (a) entsprechen, und
- die Abschlussplatte so angeordnet ist, dass sie in einer ersten Position für die Bohrungen des Blocks einen Boden bereitstellt und in einer zweiten Position die Öffnungen der Bodenplatte nach unten freigibt;
(d) ein oder mehrere Auffanggefäße unterhalb der Abschlussplatte, wobei die Anzahl der Auffanggefäße der Anzahl der Bohrungen entspricht und jedes Auffanggefäß so angeordnet ist, dass durch die entsprechende Öffnung Abschlussplatte fallende Kugeln aufgefangen werden können.

12. Vorrichtung gemäß Anspruch 11, ferner umfassend einen Rüttelmechanismus.

13. Verwendung einer Vorrichtung gemäß einem der Ansprüche 1 bis 12 zum Verteilen von Kugeln.

14. Verwendung gemäß Anspruch 13, **dadurch gekennzeichnet, dass** die Kugeln im Wesentlichen gleich groß sind.

15. Verwendung gemäß Anspruch 14, **dadurch gekennzeichnet, dass** bei der Vorrichtung
- der Radius jeder Öffnung zwischen dem 1,05- und 1,3-fachen des durchschnittlichen Radius einer Kugel beträgt,
- auf dem Umfang einer Vertiefung erster Art die Distanz der auf der Querachse liegenden Punkte mit dem größten Abstand zwischen dem 3,5- und 4-fachen des durchschnittlichen Radius einer Kugel beträgt, und
- die Neigung des Bodens auf jeder der beiden Hälften der Längsachse einer Vertiefung erster Art einen Neigungswinkel zwischen 11° und 12° aufweist.

16. Verwendung gemäß einem der Ansprüche 13 bis 15, **dadurch gekennzeichnet, dass** die Kugeln aus einem Material mit einer Dichte zwischen 5 g/cm³ und 8 g/cm³ bestehen.

17. Methode zum Entnehmen einer vorbestimmten Anzahl an Kugeln aus einem Vorrat von im Wesentlichen gleich großen Kugeln, umfassend die Schritte
(a) Bereitstellen eines Kugelvorrates in einem Vorratsbehälter mit einer Vorrichtung gemäß einem der Ansprüche 1 bis 12 als Bodenplatte (110), wobei der Radius jeder Öffnung dem durchschnittlichen Radius der Kugeln, multipliziert mit einem Faktor zwischen 1,05 und 1,95 entspricht;
(b) Bereitstellen eines quaderförmigen Blocks mit einer oder mehreren senkrecht von der oberen zur unteren Seite durchlaufenden Bohrungen mit kreisrundem Querschnitt, wobei
- Anzahl, Durchmesser und Position der Bohrungen denen der Öffnungen der Bodenplatte in Schritt (a) entsprechen,
- die Bodenplatte dem Block aufliegt und der Block gegenüber der Bodenplatte verschiebbar ist, so dass in einer ersten Position die Öffnungen der Bodenplatte mit den Bohrungen des Blocks fluchten und in einer zweiten Position Bodenplatte und Block so gegeneinander verschoben sind, dass keine Kugeln durch die Öffnungen der Bodenplatte in die Bohrungen des Blocks gelangen können, und
- die Länge der Bohrungen im Block so gewählt ist, dass in jeder Bohrung eine vorbestimmte Anzahl an Kugeln aufgestapelt werden können und dass die jeweils oberste Kugel auf der Höhe des oberen Randes der jeweiligen Öffnung im Wesentlichen bündig abschliesst, ohne über den Rand hinauszuragen;
(c) Bereitstellen einer gegen den Block verschiebbaren Abschlussplatte unterhalb des Blocks mit einer oder mehreren senkrecht von der oberen zur unteren Seite durchlaufenden Bohrungen, wobei
- Anzahl, Durchmesser und Position der Bohrungen denen der Öffnungen der Bodenplatte in Schritt (a) entsprechen, und
- die Abschlussplatte so angeordnet ist, dass sie in einer dritten Position für die Bohrungen des Blocks einen Boden bereitstellt und in einer vierten Position die Öffnungen der Bodenplatte nach unten freigibt;
(d) Befüllen der Bohrungen im Block, wobei Bodenplatte und Block in der ersten Position und Block und Abschlussplatte in der dritten Position angeordnet sind; und
(e) Entnahme der Kugeln aus den Bohrungen des Blocks durch Anordnen von Bodenplatte und Block in der zweiten Position und Block und Abschlussplatte in der vierten Position, wobei unterhalb der Bohrungen des Blocks ein oder mehrere Auffanggefäße vorgehalten werden.

18. Methode gemäß Anspruch 17, **dadurch gekennzeichnet, dass** in Schritt (d) der Kugelvorrat gerüttelt wird.

19. Methode nach einem der Ansprüche 16 oder 17, **dadurch gekennzeichnet, dass** die Zustandsänderung von der ersten und der dritten Position zu der zweiten und der vierten Position gleichzeitig erfolgt.

## Claims

1. Device comprising a horizontal plate (110) that can be used as a base plate of a storage container with two or more openings (10) of equal size which run vertically from the upper to the lower side, wherein the plate has a well (50) of the first type around each opening (10) on the upper side (70) and the wall and bottom of the well of the first type are curved,
**characterized in that**
- the openings (10) are circular (20), for example in the form of bored holes,
- the circumference of each well of the first type (30) has an elliptical, oval or spindle-shaped form on the plane of the plate surface (70),
- the bottom of the well of the first type is inclined along the longitudinal axis towards the middle of the opening,
- the centre of each opening in each case lies on the centre of the longitudinal axis and of the lateral axis of the circumference of the well of the first type that is located above it,
- two or more wells of the first type are arranged on a common longitudinal axis and
- the circumferences of two or more wells of the first type overlap with one another.

2. Device according to claim 1, **characterized in that** on the circumference of the well of the first type (30) the distance between the points on the longitudinal axis having the greatest spacing is between 3-times and 8-times the radius of the bored hole.

3. Device according to one of the claims 1 or 2, **characterized in that** on the circumference of the well of the first type (30) the distance between the points on the transverse axis having the greatest spacing is between 2.5-times and 5-times the radius of the bored hole.

4. Device according to one of the claims 1 to 3, **characterized in that** the inclination of the bottom (40) on each of the two halves of the longitudinal axis of the well of the first type has an angle of inclination between 5° and 15°.

5. Device according to claim 4, **characterized in that** the inclination of the bottom (40) on each of the two halves of the longitudinal axis of the well of the first type has an angle of inclination between 11° and 12°.

6. Device according to claim 5, **characterized in that** the angle of inclination is 11.31°.

7. Device according to one of the claims 1 to 6, **characterized in that** the plate (110) comprises four or more openings (10), wherein a plurality of wells of the first type (50) are arranged such that two or more longitudinal axes and two or more transverse axes of these wells of the first type cross at right angles.

8. Device according to claim 7, **characterized in that** a first opening (10) is connected with either one or more further openings (10) by one or more straight, horizontally-extending curved wells of the second type (130), wherein the width of a well of the second type is between one times and 2-times the radius of the bored hole and the depth of a well of the second type is between 0.01-times and 0.1-times the radius of the bored hole.

9. Device according to one of the claims 7 or 8, **characterized in that** 96 openings are arranged in the plate as an 8 x 12 grid.

10. Device according to one of the claims 7 or 8, **characterized in that** 384 openings are arranged in the plate as a 16 x 12 grid.

11. Device according to one of the claims 1 to 10, additionally comprising
(a) a storage container with spheres of essentially the same size, the base plate of which is the device according to one of the claims 1 to 10;
(b) a cuboid-shaped block with one or more bored holes running vertically from the upper to the lower side, wherein
- the number, diameter and position of the bored holes corresponds to those of the openings of the base plate in step (a),
- the base plate (110) rests on the block and the block can be displaced relative to the base plate such that in a first position the openings of the base plate align with the bored holes of the block and in a second position the base plate and block are displaced relative to one another such that no spheres can pass through the openings of the base plate into the bored holes of the block, and
- the thickness of the block is selected such that in each bored hole a predetermined number of spheres can be stacked up and that the uppermost sphere in each case is essentially flush with the level of the upper rim of the respective opening without protruding beyond the rim;
(c) a closing plate below the block that can be moved relative to the block which has one or more bored holes that run vertically from the upper to the lower side, wherein
- the number, diameter and position of the bored holes correspond to those of the openings of the base plate in step (a), and
- the closing plate is arranged such that in a first position it provides a bottom for the bored holes of the block and in a second position it uncovers the bottom of the openings of the base plate;
(d) one or more collecting vessels below the closing plate, wherein the number of collecting vessels corresponds to the number of bored holes and each collecting vessel is arranged such that spheres falling through the corresponding opening of the closing plate can be collected.

12. Device according to claim 11, additionally comprising a shaking mechanism.

13. Use of a device according to one of the claims 1 to 12 to distribute spheres.

14. Use according to claim 13, **characterized in that** the spheres are of essentially the same size.

15. Use according to claim 14, **characterized in that** in the device
- the radius of each opening is between 1.05-times and 1.3-times the average radius of a sphere,
- on the circumference of a well of the first type the distance between the points on the transverse axis having the greatest spacing is between 3.5-times and 4-times the average radius of a sphere, and
- the inclination of the bottom on each of the two halves of the longitudinal axis of a well of the first type has an angle of inclination between 11° and 12°.

16. Use according to one of the claims 13 to 15, **characterized in that** the spheres consist of a material with a density between 5 g/cm³ and 8 g/cm³.

17. Method for removing a predetermined number of spheres from a store of spheres of essentially the same size comprising the steps
(a) providing a store of spheres in a storage container with a device according to one of the claims 1 to 12 as a base plate (110), wherein the radius of each opening corresponds to the average radius of the spheres multiplied by a factor between 1.05 and 1.95;
(b) providing a cuboid-shaped block with one or more bored holes having a circular cross-section which run vertically from the upper to the lower side, wherein
- the number, diameter and position of the bored holes corresponds to those of the openings of the base plate in step (a),
- the base plate rests on the block and the block can be displaced relative to the base plate such that in a first position the openings of the base plate align with the bored holes of the block and in a second position the base plate and block are displaced relative to one another such that no spheres can pass through the openings of the base plate into the bored holes of the block, and
- the length of the bored holes in the block is selected such that in each bored-hole a predetermined number of spheres can be stacked up and that the uppermost sphere in each case is essentially flush with the level of the upper rim of the respective opening without protruding beyond the rim;
(c) providing a closing plate below the block that can be moved relative to the block which has one or more bored holes that run vertically from the upper to the lower side, wherein
- the number, diameter and position of the bored holes correspond to those of the openings of the base plate in step (a), and
- the closing plate is arranged such that in a third position it provides a bottom for the bored holes of the block and in a fourth position it uncovers the bottom of the openings of the base plate;
(d) filling the bored holes in the block where the base plate and block are arranged in the first position and the block and closing plate are arranged in the third position, and
(e) removing the spheres from the bored holes of the block by arranging the base plate and block in the second position and the block and the closing plate in the fourth position, where one or more collecting vessels are provided below the bored holes of the block.

18. Method according to claim 17, **characterized in that** the store of spheres is shaken in step (d).

19. Method according to one of the claims 16 or 17, **characterized in that** the change of state from the first and third position into the second and fourth position takes place simultaneously.

## Revendications

1. Dispositif comprenant une plaque horizontale (110) utilisable comme plaque de fond d'un réservoir et pourvue de deux ouvertures (10) ou plus de même taille la traversant verticalement du côté supérieur au côté inférieur, ladite plaque présentant sur le côté supérieur (70), autour de chaque ouverture (10), un creux (50) du premier type, la paroi et le fond dudit creux du premier type étant bombés,
**caractérisé en ce que**
- les ouvertures (10) sont circulaires (20), par exemple sous forme de perçages,
- la périphérie de chaque creux du premier type (30) présente au niveau de la surface (70) de la plaque une forme elliptique, ovale ou en forme de fuseau,
- le fond du creux du premier type est incliné le long de l'axe longitudinal vers le milieu de l'ouverture,
- le centre de chaque ouverture est situé à chaque fois sur le centre des axes longitudinal et transversal de la périphérie du creux du premier type disposé au-dessus d'elle,
- deux creux ou plus du premier type sont disposés sur un axe longitudinal commun, et
- les périphéries de deux creux ou plus du premier type chevauchent l'une sur l'autre.

2. Dispositif selon la revendication 1, **caractérisé en ce que** sur la périphérie du creux du premier type (30), la distance des points situés sur l'axe longitudinal et présentant le plus grand écart est comprise entre 3 et 8 fois le rayon du perçage.

3. Dispositif selon une des revendications 1 ou 2, **caractérisé en ce que** sur la périphérie du creux du premier type (30), la distance des points situés sur l'axe transversal et présentant le plus grand écart est comprise entre 2,5 et 5 fois le rayon du perçage.

4. Dispositif selon une des revendications 1 à 3, **caractérisé en ce que** l'inclinaison du fond (40) sur chacune des deux moitiés de l'axe longitudinal du creux du premier type présente un angle d'inclinaison compris entre 5° et 15°.

5. Dispositif selon la revendication 4, **caractérisé en ce que** l'inclinaison du fond (40) sur chacune des deux moitiés de l'axe longitudinal du creux du premier type présente un angle d'inclinaison compris entre 11 ° et 12°.

6. Dispositif selon la revendication 5, **caractérisé en ce que** l'angle d'inclinaison est 11,31 °.

7. Dispositif selon une des revendications 1 à 6, **caractérisé en ce que** la plaque (110) comprend quatre ouvertures (10) ou plus, une pluralité de creux du premier type (50) étant disposés de telle manière que deux axes longitudinaux ou plus et deux axes transversaux ou plus desdits creux du premier type se croisent à angle droit.

8. Dispositif selon la revendication 7, **caractérisé en ce qu'**une première ouverture (10) est reliée avec une ou plusieurs autres ouvertures (10) par un ou plusieurs creux du second type (130) bombés, droits et s'étendant horizontalement, la largeur d'un creux du second type étant comprise entre 1 et 2 fois le rayon du perçage et la profondeur d'un creux du second type étant comprise entre 0,01 et 0,1 fois le rayon du perçage.

9. Dispositif selon une des revendications 7 ou 8, **caractérisé en ce que** 96 ouvertures sont ménagées dans la plaque, sous forme de grille 8x12.

10. Dispositif selon une des revendications 7 ou 8, **caractérisé en ce que** 384 ouvertures sont ménagées dans la plaque, sous forme de grille 16x24.

11. Dispositif selon une des revendications 1 à 10, comprenant en outre :
(a) un réservoir contenant des corps sphériques sensiblement de même taille et dont la plaque de fond est le dispositif selon une des revendications 1 à 10 ;
(b) un bloc en forme de parallélépipède, pourvu d'un ou plusieurs perçages traversant le bloc verticalement du côté supérieur au côté inférieur,
- le nombre, le diamètre et la position des perçages correspondant à ceux des ouvertures de la plaque de fond à l'étape (a),
- la plaque de fond (110) s'appuyant sur le bloc et le bloc pouvant être décalé par rapport à la plaque de fond, de sorte que dans une première position les ouvertures de la plaque de fond sont alignées avec les perçages du bloc et dans une seconde position la plaque de fond et le bloc sont décalés l'un par rapport à l'autre, empêchant ainsi les corps sphériques de parvenir à travers les ouvertures de la plaque de fond dans les perçages du bloc, et
- l'épaisseur du bloc étant telle qu'un nombre prédéterminé de corps sphériques peuvent être empilés dans chaque perçage et que le corps sphérique le plus haut se termine sensiblement au même niveau que le bord supérieur de l'ouverture respective, sans dépasser le bord ;
(c) une plaque d'extrémité au-dessous du bloc, pouvant être décalée par rapport au bloc et pourvue d'un ou plusieurs perçages la traversant verticalement du côté supérieur au côté inférieur,
- le nombre, le diamètre et la position des perçages correspondant à ceux des ouvertures de la plaque de fond à l'étape (a),
- la plaque d'extrémité étant disposée de telle manière que dans une première position elle fournit un fond pour les perçages du bloc et dans une seconde position elle libère les ouvertures de la plaque de fond vers le bas ;
(d) un ou plusieurs récipients de collecte au-dessous de la plaque de fond, le nombre de récipients de collecte correspondant au nombre de perçages et chaque récipient de collecte étant disposé de telle manière que les corps sphériques tombant à travers l'ouverture correspondante de la plaque d'extrémité puissent être collectés.

12. Dispositif selon la revendication 11, comprenant en outre un mécanisme à secousses.

13. Utilisation d'un dispositif selon une des revendications 1 à 12 pour distribuer des corps sphériques.

14. Utilisation selon la revendication 13, **caractérisée en ce que** les corps sphériques sont sensiblement de même taille.

15. Utilisation selon la revendication 14, **caractérisée en ce que** dans le dispositif
- le rayon de chaque ouverture est de 1,05 à 1,3 fois le rayon moyen d'un corps sphérique,
- sur la périphérie d'un creux du premier type, la distance des points situés sur l'axe transversal et présentant le plus grand écart est de 3,5 à 4 fois le rayon moyen d'un corps sphérique, et
- l'inclinaison du fond sur chacune des deux moitiés de l'axe longitudinal d'un creux du premier type présente un angle d'inclinaison compris entre 11° et 12°.

16. Utilisation selon une des revendications 13 à 15, **caractérisée en ce que** les corps sphériques sont en un matériau d'une densité comprise entre 5 g/cm³ et 8 g/cm³.

17. Méthode pour prélever un nombre prédéterminé de corps sphériques dans une réserve de corps sphériques sensiblement de même taille, comprenant les étapes :
(a) mise à disposition d'une provision de corps sphériques dans un réservoir muni d'un dispositif selon une des revendications 1 à 12 comme plaque de fond (110), le rayon de chaque ouverture correspondant au rayon moyen des corps sphériques, multiplié par un facteur compris entre 1,05 et 1,95 ;
(b) mise à disposition d'un bloc en forme de parallélépipède, pourvu d'un ou plusieurs perçages de section circulaire le traversant verticalement du côté supérieur au côté inférieur,
- le nombre, le diamètre et la position des perçages correspondant à ceux des ouvertures de la plaque de fond à l'étape (a),
- la plaque de fond s'appuyant sur le bloc et le bloc pouvant être décalé par rapport à la plaque de fond, de sorte que dans une première position les ouvertures de la plaque de fond sont alignées avec les perçages du bloc et dans une seconde position la plaque de fond et le bloc sont décalés l'un par rapport à l'autre, empêchant ainsi les sphères de parvenir à travers les ouvertures de la plaque de fond dans les perçages du bloc, et
- la longueur des perçages dans le bloc étant telle qu'un nombre prédéterminé de corps sphériques peuvent être empilés dans chaque perçage et que la sphère la plus haute se termine sensiblement au même niveau que le bord supérieur de l'ouverture respective, sans dépasser le bord ;
(c) mise à disposition d'une plaque d'extrémité au-dessous du bloc, pouvant être décalée par rapport au bloc et pourvue d'un ou plusieurs perçages la traversant verticalement du côté supérieur au côté inférieur,
- le nombre, le diamètre et la position des perçages correspondant à ceux des ouvertures de la plaque de fond à l'étape (a), et
- la plaque d'extrémité étant disposée de telle manière que dans une troisième position elle fournit un fond pour les perçages du bloc et dans une quatrième position elle libère les ouvertures de la plaque de fond vers le bas ;
(d) remplissage des perçages dans le bloc, la plaque de fond et le bloc étant placés dans la première position et le bloc et la plaque d'extrémité dans la troisième position ; et
(e) prélèvement des corps sphériques dans les perçages du bloc en plaçant la plaque de fond et le bloc dans la seconde position et le bloc et la plaque d'extrémité dans la quatrième position, un ou plusieurs récipients de collecte étant présentés au-dessous des perçages du bloc.

18. Méthode selon la revendication 17, **caractérisée en ce que**, à l'étape (d), la provision de corps sphériques est secouée.

19. Méthode selon une des revendications 16 ou 17, **caractérisée en ce que** le changement d'état de la première et la troisième position vers la seconde et la quatrième position s'effectue simultanément.
